# EUROPEAN PATENT SPECIFICATION

(11) **EP 2 390 027 B1**
(45) Date of publication and mention of the grant of the patent: **12.04.2017**
(21) Application number: 10163697.5
(22) Date of filing: 24.05.2010
(51) Int. Cl.: B22F 3/15, B22F 7/06, B22F 7/08, F02M 61/18, F02M 61/16

(54) **A method of manufacturing a nozzle for a fuel injector**
Verfahren zum Herstellen einer Düse für einen Kraftstoffeinspritzer
Procédé de fabrication d'une buse pour injecteur de carburant

(43) Date of publication of application: 30.11.2011
(73) Proprietor: Winterthur Gas & Diesel Ltd., 8401 Winterthur (CH)
(72) Inventor: Yildirim, Turhan, 8408 Winterthur (CH); Kuin, Nico, 8400, Winterthur (CH); Schlager, Dietmar, 8408, Winterthur (CH)
(74) Representative: Marchitelli, Mauro

(56) References cited:
- EP-A1- 1 549 449
- US-B2- 6 378 792

## Description

### Background of the invention

The present invention relates to fuel injectors for internal combustion engines. The invention relates in particular to fuel injectors for large four-stroke or two-stroke internal combustion engines with or without crosshead, such as diesel engines for marine propulsion or stationary engines to supply power.

More specifically, the present invention relates to a method for manufacturing such nozzle.

### Description of the prior art

In order to reduce the HC content in exhaust gas, to reduce the smoke, to reduce the unburned fuel deposits at the exhaust valve and at the piston and to keep clean the combustion chamber it is important to reduce the sac volume in the nozzle tip. One of the ways is to close the injection holes directly in the nozzle tip.

One of the possible and promising designs is a solution with slide valve to open and close the injection holes, as disclosed for instance in EP-A-052937 and WO2008/071187. These documents disclose a fuel injector comprising an axially displaceable spindle having a valve portion which cooperates with a corresponding valve seat of the valve guide and a cut-off element extending below the valve portion of the valve spindle into a central bore of the atomizer. The outer wall of the cut-off element is effective to open and close inlet openings of the nozzle bores.

With a design of this type it would be desirable to have a nozzle tip with a hardened sliding surface in the inner part and a hot corrosion resistant part in the outer part.

EP-A-1549449 discloses a method of manufacturing a nozzle tip wherein in a mould a corrosion-resistant first alloy is arranged in an outer area which is to constitute the outer surface of a nozzle. A second alloy is used in another area of the nozzle. The materials in the mould are treated by isostatic pressing into a consolidated material. The boundary area between the two alloys should be free of cracks.

A problem of the solution disclosed in EP-A-1549449 is that it is expensive. Additionally, the inner or outer part needs a minimum thickness of one ore more millimetres and there is a risk of lack of fusion between materials.

US-B-6378792 discloses a fuel injection nozzle provided with a valve seat and a nozzle tip. The valve seat is obtained by a metal bar and the nozzle tip is molded by metal injection molding. The valve seat and nozzle tip are joined by welding.

### Summary of the invention

The object of the present invention is to provide an improved method of manufacturing a nozzle which will overcome the above problems.

In accordance with the present invention, this object is achieved by a method of manufacturing a nozzle having the features of claim 1.

### Brief description of the drawings

Further characteristics and advantages of the present invention will become clear in the course of the detailed description which follows, given purely by way of non-limiting example, with reference to the annexed drawings, wherein:
- figures 1 to 4 are schematic axial cross-sections showing the steps of a method of manufacturing a nozzle according to the present invention, and
- figure 5 to 8 are schematic axial cross-sections showing a variant of the method of figures 1 to 4.

### Description of preferred embodiments

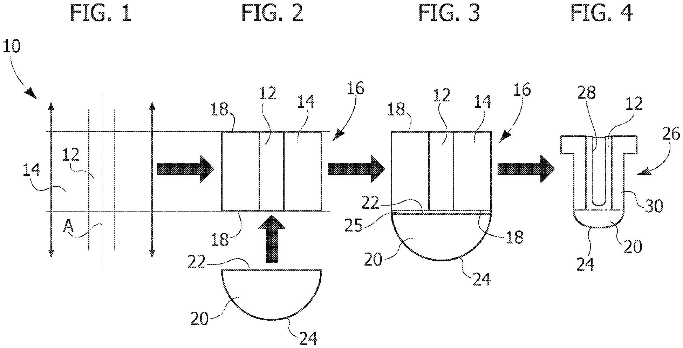

Referring initially to figure 1, the method of manufacturing a nozzle according to the present invention provides in a first step the formation of a multilayer cylindrical bar 10 elongated in a longitudinal direction A. The multilayer cylindrical bar 10 has an inner core 12 consisting of a wear resistant material and an outer annular layer 14 made of a corrosion resistant material which surrounds the inner core 12.

A material can be defined as corrosion resistant, in the application in combustion chambers of large diesel engines, especially diesel engines which burn heavy fuel oils (without coatings on the outer surface), if the chromium content is greater than 20% (mass per cent).

Examples of corrosion resistant materials for this application include: Stellite 6, Haynes 188, Stellite 4, Inconel MA 758, Haynes 230, Nicofer 6125GT, Alloy 6052, Nimonic 81, Inconel 671, Haynes 160.

In this application the definition "wear resistant" means that the inner core 12 has a hardness greater than 40 HRC and preferably greater than 52 HRC.

The multilayer bar 10 can be obtained by hot isostatic pressing (HIP) of wear resistant and corrosion resistant materials or by inserting a rod or tube of wear resistant material into a tube of corrosion resistant material. The inner rod or tube 12, the outer tube 14 or both the inner rod or tube (12) and the outer tube (14) can be manufactured as separate solid elements by HIP.

The multilayer bar 10 can also be obtained by HIP of an inner bar or tube 12 into an outer tube 14 or by HIP of an outer tube 14 around an inner rod or tube 12.

It is also possible to have an additional intermediate layer between the inner rod or tube 12 and the outer tube 14 to combine both parts together by HIP, if they are machined as solid elements before being joined to each other. The intermediate layer can be inserted as a powder and will join the materials of the inner rod or tube 12 and outer tube 14 during the HIP-process and will be solid after the HIP process. The intermediate layer can also be fixed to the inner rod or tube 12 and outer tube 14 by brazing. The intermediate layer constitutes therefore a connection layer which joins the parts together after the brazing procedure.

Preferably, the multilayer cylindrical bar 10 has an outer diameter comprised between 10 and 50 mm, the inner core 12 has a diameter comprised between 5 and 20 mm and the outer annular layer 14 has a thickness comprised between 2.5 and 15 mm.

In a second step, shown in figure 2, the elongated multilayer bar 10 is cut transversally to the longitudinal axis A to form cylindrical blanks 16 having a length L. The length L of the blanks 16 is determined by the size of the nozzle, and is preferably comprised between 25 and 120 mm. Each blank 16 has two planar front surfaces 18 orthogonal to the longitudinal axis A.

In a third step, shown in figure 3, a tip 20 of corrosion resistant material is fixed to one of the front surfaces 18 of the blank 16. The tip 20 has a planar surface 22 and a surface 24 which can be hemispherical or with any other shape. The planar surface 22 is welded to one of the front surfaces 18 of the blank 16 by friction welding, ion beam welding, brazing or other welding processes, the choice of the welding process being dependent on the materials involved. The tip 20 can also be fixed to the blank 16 by HIP.

A transverse layer 25 can be provided between the surfaces 18, 22. The transverse layer 25 can be of the same corrosion resistant material as the outer layer 14 and tip 20 or of a different corrosion resistant material. The transverse layer can be formed by a powder or paste which, after a HIP-process or brazing process, joins the materials as a solid transverse layer.

In a following series of production steps the blank 16 with the tip 20 fixed thereto is shaped as a finished nozzle, indicated by the reference number 26 in figure 4. The production steps for shaping the finished nozzle 26 include HIP, machining and heat treatments.

The finished nozzle 26 has a longitudinal bore 28 closed at its bottom end, formed in the core 12 of wear resistant material 12 and an outer body 30 entirely made of corrosion resistant material. A plurality of nozzle bores (not shown) is formed in a lateral wall of the body 30. The nozzle bores have respective inner openings facing into the longitudinal bore 28 and outlet openings open on an outer surface of the body 30.

The finished nozzle 26 is protected by a wear resistant layer 12 which surrounds the longitudinal bore 28 and by a corrosion resistant layer 30 which forms the outer surface of the nozzle.

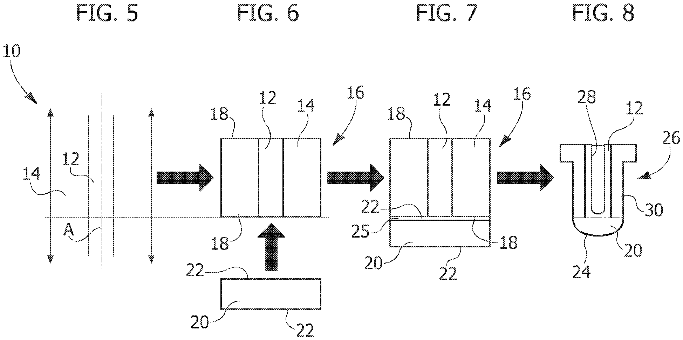

In the variant of figures 5 to 8 the only difference is that the tip 20 is disk-shaped, with two parallel front surfaces 22. The disk-shaped tip is welded or joined by HIP-process or brazing process, e.g. with a transverse layer 25, to the blank 16 as previously disclosed and then formed in a rounded shape during the shaping of the finished nozzle 26.

## Claims

1. A method of manufacturing a nozzle (26) for a fuel injector for internal combustion engines, **characterised by**:
- forming a multilayer cylindrical bar (10) elongated in a longitudinal direction (A), having an inner core (12) of wear resistant material and an outer annular layer (14) of a corrosion resistant material which surrounds the inner core (12), the multilayer bar (10) having a length in said longitudinal direction (A) greater than the length of a nozzle blank (16);
- cutting the multilayer bar (10) in directions orthogonal to said longitudinal direction (A) to form a cylindrical blank (16) with planar front surfaces (18);
- fixing a tip (20) of corrosion resistant material on one of said front surfaces (18) of said blank (16); and
- shaping the blank (16) with the tip (20) fixed thereto into a finished nozzle (26).

2. A method according to claim 1, **characterised in that** fixing of said tip (20) to said blank (16) is obtained by:
- welding,
- joining by HIP-process, or
- brazing.

3. A method according to claim 1, **characterised in that** a transverse layer (25) is provided between facing surfaces (18, 22) of said blank (16) and tip (20).

4. A method according to claim 1, **characterised in that** said bar (10) is obtained by hot isostatic pressing (HIP) of wear resistant and corrosion resistant materials.

5. A method according to claim 1, **characterised in that** said bar (10) is obtained by inserting a inner rod or tube (12) of wear resistant material into an outer tube (14) of corrosion resistant material.

6. A method according to claim 5, **characterised in that** the inner rod or tube (12) and/or the outer tube (14), and/or the tip (20) is/are manufactured as separate solid elements by HIP.

7. A method according to claim 1, **characterised in that** said bar (10) is obtained by HIP of an inner rod or tube (12) into an outer tube (14) or by HIP of an outer tube (14) around a inner rod or tube (12).

8. A method according to claim 5, **characterised in that** an intermediate layer is provided between said inner rod or tube (12) and said outer tube (14), and that said inner rod or tube (12) and said outer tube (14) are fixed to each other by HIP or by brazing.

9. A method according to claim 1, **characterised in that** the multilayer cylindrical bar (10) has an outer diameter comprised between 10 and 50 mm, the inner core (12) has a diameter comprised between 5 and 15 mm and the outer annular layer (14) has a thickness comprised between 2.5 and 15 mm.

10. A method according to claim 1, **characterised in that** said corrosion-resistant material has a chromium content greater than 20% in mass.

11. A method according to claim 1, **characterised in that** said wear resistant material has a hardness greater than 40 HRC and preferably greater than 52 HRC.

12. A method according to claim 1, **characterised in that** said tip (20) has a planar surface (22) which is welded to one of the front surfaces (18) of the blank (16) by friction welding, ion beam welding, or brazing.

13. A method according to claim 1, **characterised in that** said tip (20) has a hemispherical surface (24).

14. A method according to claim 1, **characterised in that** said tip (20) is disk-shaped, with two parallel planar surfaces (22).

## Patentansprüche

1. Verfahren zum Herstellen einer Düse (26) für einen Kraftstoffeinspritzer für Verbrennungskraftmaschinen, **gekennzeichnet durch**:
- Ausbilden einer mehrschichtigen zylindrischen Stange (10), die in einer Längsrichtung (A) gestreckt ist, mit einem inneren Kern (12) aus verschleißfestem Material und einer äußeren ringförmigen Schicht (14) aus einem korrosionsfestem Material, die den inneren Kern (12) umgibt, wobei die mehrschichtige Stange (10) in der Längsrichtung (A) eine Länge aufweist, die größer als die Länge eines Düsenrohlings (16) ist;
- Schneiden der mehrschichtigen Stange (10) in zur Längsrichtung (A) senkrechten Richtungen, um einen zylindrischen Rohling (16) mit ebenen Stirnflächen (18) auszubilden;
- Befestigen einer Spitze (20) aus korrosionsfestem Material an einer der Stirnflächen (18) des Rohlings (16) und
- Formen des Rohlings (16) mit der daran befestigten Spitze (20) zu einer fertigen Düse (26).

2. Verfahren nach Anspruch 1, **dadurch gekennzeichnet, dass** das Befestigen der Spitze (20) am Rohling (16) erhalten wird durch:
- Schweißen,
- Verbinden durch einen HIP-Prozess oder
- Löten.

3. Verfahren nach Anspruch 1, **dadurch gekennzeichnet, dass** zwischen gegenüberliegenden Oberflächen (18, 22) des Rohlings (16) und der Spitze (20) eine Querschicht (25) bereitgestellt ist.

4. Verfahren nach Anspruch 1, **dadurch gekennzeichnet, dass** die Stange (10) durch heißisostatisches Pressen (HIP) abriebfester und korrosionsfester Materialien erhalten wird.

5. Verfahren nach Anspruch 1, **dadurch gekennzeichnet, dass** die Stange (10) durch Einführen eines inneren Stabs oder Rohrs (12) aus verschleißfestem Material in ein äußeres Rohr (14) aus korrosionsfestem Material erhalten wird.

6. Verfahren nach Anspruch 5, **dadurch gekennzeichnet, dass** der innere Stab bzw. das innere Rohr (12) und/oder das äußere Rohr (14) und/oder die Spitze (20) als separate feste Elemente durch HIP gefertigt werden.

7. Verfahren nach Anspruch 1, **dadurch gekennzeichnet, dass** die Stange (10) durch HIP eines inneren Stabs oder Rohrs (12) in ein äußeres Rohr (14) oder durch HIP eines äußeren Rohrs (14) um einen inneren Stab oder ein inneres Rohr (12) erhalten wird.

8. Verfahren nach Anspruch 5, **dadurch gekennzeichnet, dass** zwischen dem inneren Stab bzw. Rohr (12) und dem äußeren Rohr (14) eine Zwischenschicht bereitgestellt ist und dass der innere Stab bzw. das innere Rohr (12) und das äußere Rohr (14) durch HIP oder durch Löten aneinander befestigt werden.

9. Verfahren nach Anspruch 1, **dadurch gekennzeichnet, dass** die mehrschichtige zylindrische Stange (10) einen Außendurchmesser im Bereich von 10 bis 50 mm aufweist, der innere Kern (12) einen Durchmesser im Bereich von 5 bis 15 mm aufweist und die äußere ringförmige Schicht (14) eine Stärke im Bereich von 2,5 bis 15 mm aufweist.

10. Verfahren nach Anspruch 1, **dadurch gekennzeichnet, dass** das korrosionsfeste Material einen Chromanteil von mehr als 20 Ma% aufweist.

11. Verfahren nach Anspruch 1, **dadurch gekennzeichnet, dass** das verschleißfeste Material eine Härte von mehr als 40 HRC und vorzugsweise mehr als 52 HRC aufweist.

12. Verfahren nach Anspruch 1, **dadurch gekennzeichnet, dass** die Spitze (20) eine ebene Oberfläche (22) aufweist, die durch Reibschweißen, Ionenstrahlschweißen oder Löten an eine der Stirnflächen (18) des Rohlings (16) geschweißt ist.

13. Verfahren nach Anspruch 1, **dadurch gekennzeichnet, dass** die Spitze (20) eine halbkugelförmige Oberfläche (24) aufweist.

14. Verfahren nach Anspruch 1, **dadurch gekennzeichnet, dass** die Spitze (20) scheibenförmig mit zwei parallelen ebenen Oberflächen (22) ist.

## Revendications

1. Procédé pour fabriquer une buse (26) pour un injecteur de carburant pour des moteur à combustion interne, **caractérisé par** les étapes consistant à :
former une barre cylindrique multicouche (10) allongée dans une direction longitudinale (A), ayant une âme interne (12) en matériau résistant à l'usure et une couche annulaire externe (14) en matériau résistant à la corrosion qui entoure l'âme interne (12), la barre multicouche (10) ayant une longueur dans ladite direction longitudinale (A) supérieure à la longueur d'une ébauche de buse (16) ;
couper la barre multicouche (10) dans des directions orthogonales à ladite direction longitudinale (A) afin de former une ébauche cylindrique (16) avec des surfaces avant planaires (18) ;
fixer une pointe (20) en matériau résistant à la corrosion sur l'une desdites surfaces avant (18) de ladite ébauche (16) ; et
former l'ébauche (16) avec la pointe (20) fixée à cette dernière en une buse finie (26).

2. Procédé selon la revendication 1, **caractérisé en ce que** ladite étape consistant à fixer ladite pointe (20) sur ladite ébauche (16) est obtenue par :
soudage,
assemblage par processus HIP, ou
brasage.

3. Procédé selon la revendication 1, **caractérisé en ce qu'**une couche transversale (25) est prévue entre des surfaces en vis-à-vis (18, 22) de ladite ébauche (16) et la pointe (20).

4. Procédé selon la revendication 1, **caractérisé en ce que** ladite barre (10) est obtenue par pression isostatique à chaud (HIP) des matériaux résistants à l'usure et résistant à la corrosion.

5. Procédé selon la revendication 1, **caractérisé en ce que** ladite barre (10) est obtenue en insérant une tige ou tube interne (12) en matériau résistant à l'usure dans un tube externe (14) en matériau résistant à la corrosion.

6. Procédé selon la revendication 5, **caractérisé en ce que** la tige ou tube interne (12) et/ou le tube externe (14) et/ou la pointe (20) est/sont fabriqués en tant qu'élément pleins séparés par HIP.

7. Procédé selon la revendication 1, **caractérisé en ce que** ladite barre (10) est obtenue par HIP d'une tige ou tube interne (12) dans un tube externe (14) ou par HIP d'un tube externe (14) autour d'une tige ou tube interne (12).

8. Procédé selon la revendication 5, **caractérisé en ce qu'**une couche intermédiaire est prévue entre ladite tige ou tube interne (12) et ledit tube externe (14), et **en ce que** ladite tige ou tube interne (12) et ledit tube externe (14) sont fixés entre eux par HIP ou par brasage.

9. Procédé selon la revendication 1, **caractérisé en ce que** la barre cylindrique multicouche (10) a un diamètre externe compris entre 10 et 50 mm, l'âme interne (12) a un diamètre compris entre 5 et 15 mm et la couche annulaire externe (14) a une épaisseur comprise 2,5 et 15 mm.

10. Procédé selon la revendication 1, **caractérisé en ce que** ledit matériau résistant à la corrosion a une teneur en chrome supérieure à 20 % en poids.

11. Procédé selon la revendication 1, **caractérisé en ce que** ledit matériau résistant à l'usure a une dureté supérieure à 40 HRC et de préférence supérieure à 52 HRC.

12. Procédé selon la revendication 1, **caractérisé en ce que** ladite pointe (20) a une surface planaire (22) qui est soudée sur l'une des surfaces avant (18) de l'ébauche (16) par soudage par friction, soudage par faisceau ionique ou brasage.

13. Procédé selon la revendication 1, **caractérisé en ce que** ladite pointe (20) a une surface hémisphérique (24).

14. Procédé selon la revendication 1, **caractérisé en ce que** ladite pointe (20) est en forme de disque, avec deux surfaces planaires (22) parallèles.
